# EUROPEAN PATENT SPECIFICATION

(11) **EP 3 771 540 B1**
(45) Date of publication and mention of the grant of the patent: **30.04.2025**
(21) Application number: 19204027.7
(22) Date of filing: 18.10.2019
(51) Int. Cl.: B29B 9/12, B29B 9/16, C08G 63/08, C08G 63/88, B29K 67/00

(54) **METHOD AND APPARATUS FOR CRYSTALLIZING POLYLACTIDE (PLA) GRANULES**
VERFAHREN UND VORRICHTUNG ZUR KRISTALLISIERUNG VON POLYLACTID (PLA)-GRANULATEN
PROCÉDÉ ET APPAREIL DE CRISTALLISATION DE GRANULÉS DE POLYLACTIDE (PLA)

(30) Priority: 31.07.2019 DE 102019120754
(43) Date of publication of application: 03.02.2021
(73) Proprietor: Vibra Maschinenfabrik Schultheis GmbH & Co., 63075 Offenbach (DE)
(72) Inventor: Schultheis, Winfried, 63075 Offenbach (DE); Tripp, Peter, 63075 Offenbach (DE)
(74) Representative: Beck & Rössig European Patent Attorneys

(56) References cited:
- WO-A1-2007/025903
- WO-A2-2007/139664
- CN-A- 101 988 786
- US-A1- 2011 130 513
- US-B1- 6 749 821
- US-B2- 8 728 368

## Description

The invention relates to a method and to an apparatus for crystallizing polylactide (PLA) granules.

Due to their biodegradability, polylactides are an attractive alternative to conventional plastics materials. Ready-to-use PLA compounds consist of PLA and other additives, allowing them to be adapted to different applications.

PLA is usually obtained from D- and/or L-lactide. After polymerization, the PLA can be extruded or granulated by means of a granulator.

PLA granules usually exit the granulator at a temperature in the range of 80 to 120°C. The individual PLA granule particles have an amorphous structure and a very tacky surface.

The amorphous structure can be converted into an at least partly crystalline state having greater alignment among its molecular chains in a thermal after-treatment step that is also referred to as crystallization.

Due to the glass transition temperature of about 60 to 80°C and the crystallization temperature of about 90°C, which are very close to each other, drying and crystallizing PLA is made difficult because the granule particles must be prevented from sticking to each other during crystallization.

A customary procedure has hitherto been to guide the initially tacky PLA granules through a rotary tube and to supply heat during this process by irradiating the granule particles with infrared light.

A method for crystallizing PLA granules comprising the features of the preamble portion of claim 1 is known from US 2011/0130513 A1. An apparatus comprising the features of the preamble portion of claim 7 is known from US 8,728,368 B2.

The object of the present invention is to present energy-efficient alternatives for the crystallization of PLA granules that prevent granule particles from sticking to each other.

This object is achieved by a method according to claim 1.

The present invention makes it possible for the first time to pre-crystallize PLA granules in the form of bulk material in a vibrating trough system.

Lengthy experiments have shown that an additional energy supply can be dispensed with entirely here. Rather, it is possible to transfer the PLA granules from a granulator to the vibrating trough system without further heat input. With appropriate process control, the crystallization heat is sufficient to maintain a sufficient crystallization temperature in the vibrating trough system throughout said residence time. During the residence time of 20 to 60 minutes in the temperature range of 80 to 120°C, the degree of crystallization increases, whereas the tackiness of the surface of the PLA granule particles is practically no longer present toward the end of the residence time.

Due to the vibration excitation of the bulk material, in particular during the initial phase, the PLA granule particles are reliably prevented from sticking to each other.

The vibration excitation also makes possible good mixing and, above all, good heat exchange of the granule particles with each other. The method according to the invention allows a degree of crystallization having a melting enthalpy of between 5 and 20 J/g to be achieved in the vibrating trough system at the end of the residence time.

The vibrating trough system comprises one or a plurality of vibrating troughs, preferably connected in series, through which the bulk material slowly passes. For higher throughputs, vibrating troughs can also be operated parallel to each other.

The PLA granules continuously pass through a vibrating trough along a helical path about the longitudinal axis of said vibrating trough by means of corresponding vibration excitation. This has a particularly favorable effect on the internal heat exchange in the granule bulk material.

For a stable process flow, movement of the PLA granules in the vibrating trough system occurs at an acceleration of 3 g or more, where g = 9.81 m/s². The vibrating trough system is accordingly designed to generate accelerations of up to about 10 g. The intense movement of the bulk material prevents the initially very tacky PLA granule particles from forming clumps.

The fact that all PLA granule particles are kept within a narrow temperature window means that a particularly homogeneous product quality is achieved at the end of this pre-crystallization.

After overcoming the tacky phase and exiting the vibrating trough system, the PLA granules can be further crystallized in a further process step in order to further increase the degree of crystallization.

Advantageous embodiments of the invention form the subject matter of further claims.

During pre-crystallization, it is preferably ensured that the temperature of the PLA granules in the vibrating trough system deviates from a preset nominal granule temperature by no more than +/- 5°C. Due to the narrow temperature control, a stable process flow without caking of the granules can be ensured for the PLA granule bulk material in a vibrating trough system despite the proximity of the glass transition temperature to the crystallization temperature.

In general, the PLA granules can vibrate in the vibrating trough system without additional heat input from the outside. Throughput, heat of crystallization and thermal conductivities of the vibrating trough system can be coordinated accordingly.

PLA granules are highly hygroscopic. The bulk material can therefore contain moisture introduced during the preceding polymerization and/or granulation. To improve the pre-crystallization, it is therefore optionally possible for granule dehumidification to additionally take place, for example, by injecting dehumidified air into the bulk material by means of nozzles.

According to a further advantageous embodiment of the invention, a next process step for further increasing the degree of crystallization, hereinafter also referred to as crystallization stage, can follow after the tacky phase is overcome (pre-crystallization). For this purpose, the pre-crystallized PLA granules are transferred from the vibrating trough system to a crystallization silo, the crystallization temperature being maintained. The residence time in the silo is 100 to 200 minutes. Because the surface of the PLA granule particles is no longer tacky after the pre-crystallization stage, intense movement as in the pre-crystallization stage is no longer required. The further crystallization can thus take place at the crystallization temperature in a substantially static state during the abovementioned residence time. As a variation of this, such further crystallization can likewise be carried out in a further or additional vibrating trough system. After this further crystallization, a degree of crystallization having a melting enthalpy in the order of magnitude of 25 to 30 J/g is achieved.

After the PLA granules crystallize, they are cooled for storage or packaging. It has been found that it is particularly advantageous to cool the PLA granules by means of contact cooling.

During the further crystallization of the PLA granules in the silo and/or the further vibrating trough system and/or during cooling, dry air can be supplied in a preconditioned manner with respect to the air humidity to reduce the granule moisture and/or to prevent the highly hygroscopic PLA granules from absorbing additional moisture from the environment.

The above-indicated technical problem is also solved by an apparatus comprising the features of claim 7. The apparatus comprises at least one pre-crystallization stage for overcoming the tacky phase on the surface of the PLA granule particles in the form of one or a plurality of vibrating troughs for moving PLA granule bulk material by means of vibration. Said pre-crystallization stage is followed by a crystallization stage for further crystallization of the PLA granules, which are no longer tacky, from the pre-crystallization, which may preferably be in the form of a crystallization silo and/or one or more further vibrating troughs. This is followed by a cooling stage for cooling the PLA granules from the crystallization stage, in which cooling takes place by means of contact cooling.

Furthermore, an air conditioning device can in each case optionally be arranged on the crystallization silo or the at least one vibrating trough of the crystallization stage as well as on a cooling device of the cooling stage to set the granule moisture to a desired level.

Furthermore, a nozzle device for injecting conditioned dry air into the PLA granule bulk material can be arranged on a vibrating trough of the pre-crystallization stage to reduce tackiness.

The invention will be explained in more detail below with reference to an embodiment shown in the drawings. In the drawings:
- Fig. 1: is a schematic representation of an apparatus for manufacturing crystallized PLA granules;
- Fig. 2: is a schematic representation to illustrate the method according to the invention.

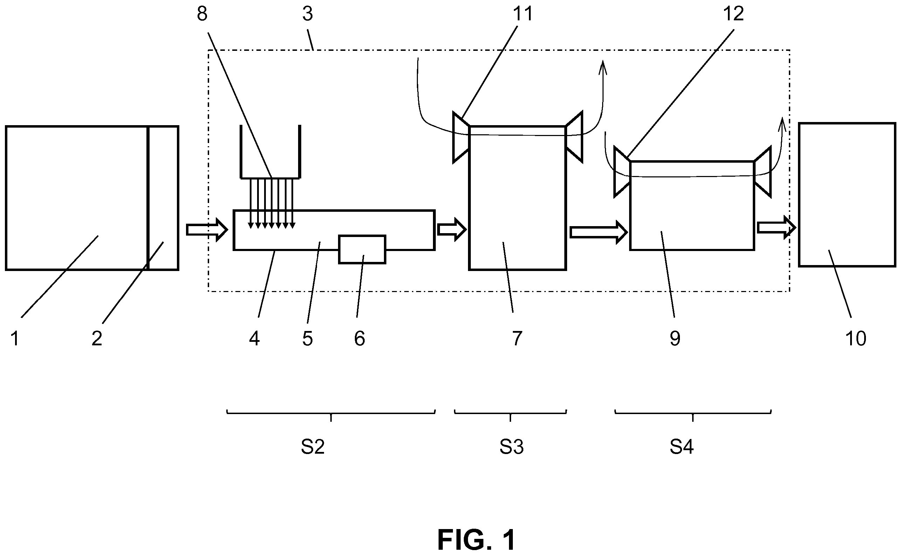

Fig. 1 shows, by way of example, an apparatus for manufacturing polylactide (PLA) granules. A polymerization device 1 is followed by a granulator 2 of known design, at the output of which PLA granule particles having a temperature in the range of 80 to 120°C are obtained.

The granule particles from the granulator 2 are transferred directly into an apparatus for crystallization 3. Additional heating or cooling of the PLA granules is not required here.

For this purpose, the crystallization apparatus 3 has a vibrating trough system 4 on the input side, which vibrating trough system comprises one or a plurality of vibrating troughs 5 for pre-crystallization. If a plurality of vibrating troughs 5 are present, said vibrating troughs can be connected in series and, optionally, also in parallel in order to produce larger volume flows.

In the present case, a vibrating trough 5 is understood to mean a trough that is mechanically vibrated by one or a plurality of vibration exciters 6 to move bulk material, in the present case PLA granules, located in the trough, from an input side to an output side in the longitudinal direction of the trough. By correspondingly arranging and coordinating the vibration exciters 6, the PLA granules located in the trough can slowly move forward along a vortex-shaped or helical path about the longitudinal axis of the trough. Here, the PLA granule bulk material is mixed thoroughly. In addition, there is an intense heat exchange between the granule particles to equalize the temperature in the bulk material.

In addition to equalization of the temperature in the bulk material, the vibration excitation of the PLA granules prevents the PLA granule particles from sticking to each other, which granule particles initially have a highly tacky surface when fed into the vibrating trough system 4 downstream of the granulator 2.

Thermal treatment of the PLA granule particles takes place in the vibrating trough system 4 practically until the tacky phase on the surface of said PLA granule particles has been overcome. It has been found that a residence time of 20 to 60 minutes is required for this purpose when a temperature of 80 to 120°C is maintained in the vibrating trough system 4. However, complete crystallization is not achieved here, which is why it is possible to speak of a pre-crystallization stage in the present case with regard to the vibrating trough system 4. Higher degrees of crystallization can be achieved by means of further thermal after-treatment, for example in a crystallization silo 7.

In the present case, the vibrating trough system 4 is configured in such a way that pre-crystallization takes place without additional heat input. The PLA granule bulk material is always kept in a narrow temperature window. This is ensured by the intense continuous vibration excitation of said PLA granule bulk material. The heat of crystallization released is sufficient for maintaining the crystallization temperature in the PLA granule bulk material.

It is particularly recommended to keep the PLA granules at a preset nominal granule temperature as constantly as possible during the pre-crystallization in the vibrating trough system 4. Said preset nominal granule temperature should not fluctuate by more than +/-5°C because the glass transition temperature and the crystallization temperature of PLA are close to each other.

As already stated, additional heating of the vibrating trough system 4 is not required. However, in order to facilitate starting up the apparatus 3 while the vibrating trough 5 is initially still cold, it is possible to pre-heat selectively for this phase, preferably by means of air, to avoid excessive local cooling and freezing of the PLA granules in the starting phase of the crystallization process.

The intense movement of the PLA granules in the vibrating trough system 4 is preferably carried out at an acceleration of at least 3 g, as a result of which the PLA granule particles are prevented from sticking to each other and good heat exchange can be ensured in the bulk material. This is advantageous for a high product quality, i.e., in particular a uniform degree of crystallization, as well as stable, continuous process control.

The initially strong tendency of the PLA granule particles to stick to each other can optionally be reduced more rapidly by injecting air into the bulk material by means of corresponding nozzle devices 8. In addition, the surface moisture of the PLA granule particles introduced by upstream processes can be reduced with the discharged air in a controlled manner by means of correspondingly preconditioned air.

After overcoming the tacky phase, the PLA granules are transferred from the vibrating trough system 4 into a crystallization silo 7 for further crystallization. The loading of the crystallization silo 7 starting from the vibration system 4 is done for example by means of a pneumatic conveyor, a bucket elevator, a vibrating conveyor or other conveying elements of the bulk material industry.

The residence time of the PLA granules in the crystallization silo 7 is preferably 100 to 200 minutes at the crystallization temperature, i.e., in the range of 80 to 120°C. Because the PLA granules are no longer tacky here, vibration excitation at least having an intensity as in the upstream vibrating trough system 4 can be omitted. Additional heat input for crystallization is not provided here. Rather, the escaping heat of crystallization is sufficient to maintain the crystallization process.

In a modification of the illustrated embodiment, this actual crystallization stage can, at least in part, be carried out in a further, additional vibrating trough system.

After the crystallization of the PLA granules, the PLA granules are cooled by means of a cooling device 9, preferably by means of contact cooling, for storage 10 and/or packaging.

In addition, air conditioning by means of a corresponding device 11, 12 can, during the further crystallization of the PLA granules in the crystallization silo 7 and/or during the cooling in the cooling device 9, optionally ensure that the PLA granules absorb no additional moisture from the environment, as a result of which a product having low granule moisture is obtained. Supplying conditioned dry air thus makes it possible to carry out further drying or adjustment of the desired granule moisture. In addition, the proportion of granule dust in the product can be reduced by means of the air supply.

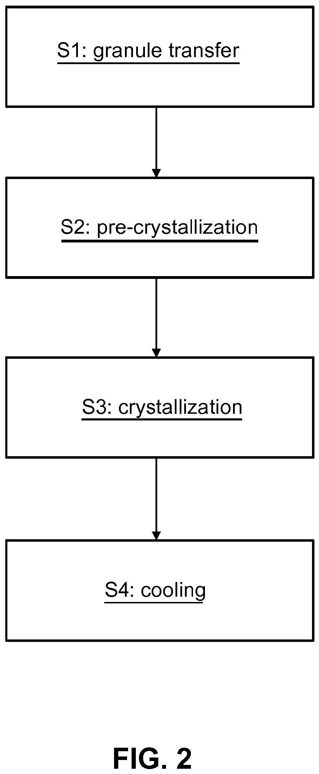

Fig. 2 abstractly illustrates the process flow of the method according to the invention once again, starting with the transfer S1 of PLA granules having a temperature of 80 to 120°C to a vibrating trough system 4 as bulk material. The PLA granules can come from initial PLA generation or, alternatively, from a molten PLA compound.

In a pre-crystallization stage S2, continuous movement of the PLA granule bulk material in the vibrating trough system 4 takes place by means of mechanical vibration of the vibrating trough system 4 with a residence time of the PLA granules in the vibrating trough system 4 of 20 to 60 minutes while maintaining the crystallization temperature of 80 to 120°C without additional heat input. In this case, the vibration excitation takes place with a minimum acceleration of the PLA granule particles of 3 g. At the end of the pre-crystallization stage S2, the PLA granule particles, which are initially highly tacky on their surface, are free-flowing and no longer tacky.

The pre-crystallization stage S2 is followed by a crystallization stage S3 for further, actual crystallization of the PLA granules, which are no longer tacky. In this case, the PLA granules are also kept at a crystallization temperature in the range of 80 to 120°C, without additional heat input being required. The residence time in the crystallization stage S3 is 100 to 200 minutes, preferably 130 to 150 minutes.

Thereafter, the crystallized PLA granules from the crystallization stage S3 are transferred to a cooling stage S4, in which the PLA granules are cooled by means of contact cooling.

The invention has been explained in detail above with reference to an embodiment and further modifications. The embodiment and the modifications serve to prove the feasibility of the invention. Technical individual features that were explained above in the context of further individual features can also be implemented independently of said further individual features and in combination with other individual features, even if this is not expressly described, as long as this is technically possible. The invention is therefore expressly not limited to the embodiment specifically described, but includes all embodiments defined by the claims.

### List of reference signs

- 1: polymerization device
- 2: granulator
- 3: apparatus for crystallizing PLA granules
- 4: vibrating trough system
- 5: vibrating trough
- 6: vibration generator
- 7: crystallization silo
- 8: nozzle device
- 9: cooling device
- 10: storage
- 11: air conditioning device on the crystallization silo
- 12: air conditioning device on the cooling device
- S1: transfer of PLA granules
- S2: pre-crystallization stage
- S3: crystallization stage (further crystallization)
- S4: cooling stage

## Claims

1. A method for crystallizing polylactide (PLA) granules, comprising:
transferring PLA granules having a temperature of 80 to 120°C in a vibrating trough system (4) as bulk material, and
continuously moving the PLA granule bulk material in the vibrating trough system (4) by means of mechanical vibration of the vibrating trough system (4) to overcome the tacky phase on the surface of the PLA granule particles of the PLA granules,
**characterized in that**
the PLA granules are continuously advanced in the vibrating trough system (4) along a helical line about a longitudinal axis of a vibrating trough (5),
the PLA granules are vibrated in the vibrating trough system (4) without additional heat input from the outside,
the residence time of the PLA granules in the vibrating trough system (4) is 20 to 60 minutes, and
the PLA granules move in the vibrating trough system (4) at an acceleration of 29.4 m/s² (3 g) to 98.1 m/s² (10 g).

2. The method according to claim 1, **characterized in that** the temperature of the PLA granules in the vibrating trough system (4) deviates from a preset nominal granule temperature by no more than +/- 5°C.

3. The method according to claim 1 or 2, **characterized in that**, after overcoming the tacky phase, the PLA granules are transferred from the vibrating trough system (4) into a crystallization silo (7) and/or a further vibrating trough system for further crystallization, the residence time in the crystallization silo (7) and/or the further vibrating trough system being 100 to 200 minutes.

4. The method according to any of claims 1 to 3, **characterized in that**, after the crystallization of the PLA granules, the PLA granules are cooled.

5. The method according to claim 4, **characterized in that** said cooling of the PLA granules after crystallization is by means of contact cooling.

6. The method according to claim 3 to 5, **characterized in that** air is supplied in a preconditioned manner with respect to the air humidity during the further crystallization of the PLA granules in the crystallization silo (7) and/or the further vibrating trough system and/or during cooling to reduce the granule moisture.

7. An apparatus for crystallizing PLA granules, comprising
a pre-crystallization stage (S2) for overcoming the tacky phase on the surface of the PLA granule particles in the form of one or a plurality of vibrating troughs (5) for moving PLA granule bulk material by means of vibration;
a crystallization stage (S3) for further crystallization of the PLA granules, which are no longer tacky, from the pre-crystallization stage in the form of a crystallization silo (7) and/or one or a plurality of further vibrating troughs;
**characterized in that**
the vibrating trough system (4) is configured in such a way that pre-crystallization takes place without additional heat input,
the pre-crystallization stage (S2) is configured to continuously advance the PLA granules in the vibrating trough system (4) along a helical line about a longitudinal axis of a vibrating trough (5), while moving the PLA granules in the vibrating trough system (4) at an acceleration of 29.4 m/s² (3 g) to 98.1 m/s² (10 g) for a residence time of the PLA granules in the vibrating trough system (4) of 20 to 60 minutes.

8. The apparatus for crystallizing PLA granules according to claim 7, **characterized in that** a device for air conditioning (11) is arranged on the crystallization silo (7) or the at least one vibrating trough of the crystallization stage (S3).

9. The apparatus for crystallizing PLA granules according to claim 7 or 8, **characterized by** a cooling stage (S4) for cooling the PLA granules from the crystallization stage (S3).

10. The apparatus for crystallizing PLA granules according to claim 7 or 8, **characterized by** a cooling stage (S4) for cooling the PLA granules from the crystallization stage (S3) by means of contact cooling.

11. The apparatus for crystallizing PLA granules according to one of claims 9 or 10, **characterized in that** a device for air conditioning (12) is arranged on a cooling device (9) of the cooling stage (S4).

12. The apparatus for crystallizing PLA granules according to one of claims 7 to 10, **characterized in that** a nozzle device (8) for injecting air into the PLA granule bulk material is arranged on a vibrating trough (5) of the pre-crystallization stage (S2).

## Patentansprüche

1. Verfahren zur Kristallisation von Polylactid (PLA)-Granulat, umfassend:
Übernehmen von PLA-Granulat mit einer Temperatur von 80 bis 120 °C in ein Vibrationsrinnensystem (4) als Schüttgut, und
ein kontinuierliches Bewegen des PLA-Granulatschüttguts in dem Vibrationsrinnensystem (4) durch mechanische Vibration des Vibrationsrinnensystems (4) zur Überwindung der klebrigen Phase an der Oberfläche der PLA-Granulatteilchen des PLA-Granulats
**dadurch gekennzeichnet, dass**
ein Vorschub des PLA-Granulats im Vibrationsrinnensystem (4) kontinuierlich und entlang einer Schraubenlinie um eine Längsachse einer Vibrationsrinne (5) erfolgt,
das PLA-Granulat in dem Vibrationsrinnensystem (4) ohne Zufuhr zusätzlicher Wärme von außen schwingungserregt wird,
die Verweilzeit des PLA-Granulats in dem Vibrationsrinnensystem (4) von 20 bis 60 min. beträgt, und
die Bewegung des PLA-Granulats in dem Vibrationsrinnensystem (4) mit einer Beschleunigung von 29,4 m/s² (3 g) bis 98,1 m/s² (10 g) erfolgt.

2. Verfahren nach Anspruch 1, **dadurch gekennzeichnet, dass** die Temperatur des PLA-Granulats in dem Vibrationsrinnensystem (4) von einer vorgegebenen Granulat-Solltemperatur um nicht mehr als +/- 5 °C abweicht.

3. Verfahren nach Anspruch 1 oder 2, **dadurch gekennzeichnet, dass** nach Überwinden der klebrigen Phase das PLA-Granulat aus dem Vibrationsrinnensystem (4) in ein Kristallisationssilo (7) und/oder weiteres Vibrationsrinnensystem zur weiteren Kristallisation überführt wird, wobei die Verweilzeit in dem Kristallisationssilo (7) und/oder dem weiteren Vibrationsrinnensystem 100 bis 200 min beträgt.

4. Verfahren nach einem der Ansprüche 1 bis 3, **dadurch gekennzeichnet, dass** nach der Kristallisation des PLA-Granulats ein Abkühlen des PLA-Granulats vorgenommen wird.

5. Verfahren nach Anspruch 4, **dadurch gekennzeichnet, dass** das Abkühlen des PLA-Granulats nach der Kristallisation durch Kontaktkühlung erfolgt.

6. Verfahren nach Anspruch 3 bis 5, **dadurch gekennzeichnet, dass** während der weiteren Kristallisation des PLA-Granulats in dem Kristallisationssilo (7) und/oder weiteren Vibrationsrinnensystem und/oder während des Abkühlens im Hinblick auf die Luftfeuchte vorkonditioniert Luft zugeführt wird, um die Granulatfeuchte zu vermindern.

7. Vorrichtung zur Kristallisation von PLA-Granulat, umfassend
eine Vorkristallisationsstufe (S2) zur Überwindung der klebrigen Phase an der Oberfläche der PLA-Granulatteilchen in Form ein oder mehrerer Vibrationsrinnen (5) zum Bewegen von PLA-Granulat-Schüttgut durch Vibration;
eine Kristallisationsstufe (S3) zur weiteren Kristallisation des nicht mehr klebrigen PLA-Granulats aus der Vorkristallisationsstufe in Form eines Kristallisationssilos (7) und/oder ein oder mehrerer weiterer Vibrationsrinnen;
**dadurch gekennzeichnet, dass**
das Vibrationsrinnensystem (4) derart konfiguriert ist, dass die Vorkristallisation ohne zusätzlichen Wärmeeintrag erfolgt,
die Vorkristallisationsstufe (S2) derart konfiguriert ist, dass ein Vorschub des PLA-Granulats im Vibrationsrinnensystem (4) kontinuierlich und entlang einer Schraubenlinie um eine Längsachse einer Vibrationsrinne (5) erfolgt, wobei die Bewegung des PLA-Granulats in dem Vibrationsrinnensystem (4) mit einer Beschleunigung von 29,4 m/s² (3 g) bis 98,1 m/s² (10 g) bei einer Verweilzeit des PLA-Granulats in dem Vibrationsrinnensystem (4) von 20 bis 60 min. erfolgt.

8. Vorrichtung zur Kristallisation von PLA-Granulat nach Anspruch 7, **dadurch gekennzeichnet, dass** an dem Kristallisationssilo (7) oder der mindestens einen Vibrationsrinne der Kristallisationsstufe (S3) eine Einrichtung zur Luftkonditionierung (11) angeordnet ist.

9. Vorrichtung zur Kristallisation von PLA-Granulat nach Anspruch 7 oder 8, **gekennzeichnet durch** eine Kühlstufe (S4) zur Abkühlung des PLA-Granulats aus der Kristallisationsstufe (S3).

10. Vorrichtung zur Kristallisation von PLA-Granulat nach Anspruch 7 oder 8, **gekennzeichnet durch** eine Kühlstufe (S4) zur Abkühlung des PLA-Granulats aus der Kristallisationsstufe (S3) durch Kontaktkühlung.

11. Vorrichtung zur Kristallisation von PLA-Granulat nach einem der Ansprüche 9 oder 10, **dadurch gekennzeichnet, dass** eine Einrichtung zur Luftkonditionierung (12) an einer Kühleinrichtung (9) der Kühlstufe (S4) angeordnet ist.

12. Vorrichtung zur Kristallisation von PLA-Granulat nach einem der Ansprüche 7 bis 10, **dadurch gekennzeichnet, dass** eine Düseneinrichtung (8) zum Eindüsen von Luft in das PLA-Granulatschüttgut an einer Vibrationsrinne (5) der Vorkristallisationsstufe (S2) angeordnet ist.

## Revendications

1. Procédé de cristallisation de granulés de polylactide (PLA), comprenant:
le transfert des granulés de PLA présentant une température de 80 à 120°C dans un système de cuve vibrante (4) en tant que matériau en vrac, et
le déplacement continu du matériau en vrac de granulés de PLA dans le système de cuve vibrante (4) au moyen d'une vibration mécanique du système de cuve vibrante (4) pour surmonter la phase collante sur la surface des particules de granulés de PLA des granulés de PLA,
**caractérisé en ce que**
les granulés de PLA sont acheminés en continu dans le système de cuve vibrante (4) le long d'une ligne hélicoïdale autour d'un axe longitudinal d'une cuve vibrante (5),
les granulés de PLA sont soumis à des vibrations dans le système de cuve vibrante (4) sans apport de chaleur supplémentaire de l'extérieur,
le temps de séjour des granules de PLA dans le système de cuve vibrante (4) est de 20 à 60 minutes, et
les granulés de PLA se déplacent dans le système de cuve vibrante (4) à une accélération de 29,4 m/s² (3 g) jusqu'à 98,1 m/s2 (10 g).

2. Procédé selon la revendication 1, **caractérisé en ce que** la température des granulés de PLA dans le système de cuve vibrante (4) s'écarte d'une température nominale préréglée de granulés de pas plus de +/- 5°C.

3. Procédé selon la revendication 1 ou 2, **caractérisé en ce que**, après avoir surmonté la phase collante, les granules de PLA sont transférés du système de cuve vibrante (4) dans un silo de cristallisation (7) et/ou un autre système de cuve vibrante pour une cristallisation ultérieure, le temps de séjour dans le silo de cristallisation (7) et/ou l'autre système de cuve vibrante étant de 100 à 200 minutes.

4. Procédé selon l'une quelconque des revendications 1 à 3, **caractérisé en ce que**, après la cristallisation des granulés de PLA, les granulés de PLA sont refroidis.

5. Procédé selon la revendication 4, **caractérisé en ce que** ledit refroidissement des granulés de PLA après cristallisation se fait au moyen d'un refroidissement par contact.

6. Procédé selon les revendications 3 à 5, **caractérisé en ce que** l'air est fourni de manière préconditionnée par rapport à l'humidité de l'air pendant la cristallisation ultérieure des granulés de PLA dans le silo de cristallisation (7) et/ou l'autre système de cuve vibrante et/ou pendant le refroidissement pour réduire l'humidité des granulés.

7. Appareil de cristallisation de granulés de PLA, comprenant
une étape de précristallisation (S2) pour surmonter la phase collante sur la surface des particules de granulés de PLA sous la forme d'une ou de plusieurs cuves vibrantes (5) pour déplacer le matériau en vrac de granulés de PLA au moyen de vibrations ;
une étape de cristallisation (S3) pour la cristallisation ultérieure des granules de PLA, qui ne sont plus collants, à partir de l'étape de précristallisation sous la forme d'un silo de cristallisation (7) et/ou d'une ou plusieurs cuves vibrantes supplémentaires;
**caractérisé en ce que**
le système de cuve vibrante (4) est configuré de telle sorte que la précristallisation a lieu sans apport de chaleur supplémentaire,
l'étape de précristallisation (S2) est configurée pour faire avancer en continu les granules de PLA dans le système de cuve vibrante (4) le long d'une ligne hélicoïdale autour d'un axe longitudinal d'une cuve vibrante (5), tout en déplaçant les granules de PLA dans le système de cuve vibrante (4) à une accélération de 29,4 m/s² (3 g) jusqu'à 98,1 m/s² (10 g) pour un temps de séjour des granules de PLA dans le système de cuve vibrante (4) de 20 à 60 minutes.

8. Appareil de cristallisation de granulés de PLA selon la revendication 7, **caractérisé en ce qu'**un dispositif de climatisation (11) est disposé sur le silo de cristallisation (7) ou sur au moins une cuve vibrante de l'étape de cristallisation (S3).

9. Appareil de cristallisation de granulés de PLA selon la revendication 7 ou 8, **caractérisé par** une étape de refroidissement (S4) pour refroidir les granulés de PLA à partir de l'étape de cristallisation (S3).

10. Appareil de cristallisation de granulés de PLA selon la revendication 7 ou 8, **caractérisé par** une étape de refroidissement (S4) pour refroidir les granulés de PLA à partir de l'étape de cristallisation (S3) au moyen d'un refroidissement par contact.

11. Appareil de cristallisation de granulés de PLA selon l'une des revendications 9 ou 10, **caractérisé en ce qu'**un dispositif de climatisation (12) est disposé sur un dispositif de refroidissement (9) de l'étape de refroidissement (S4).

12. Appareil de cristallisation de granulés de PLA selon l'une des revendications 7 à 10, **caractérisé en ce qu'**un dispositif de buse (8) pour injecter de l'air dans le matériau en vrac de granulés de PLA est disposé sur une cuve vibrante (5) de l'étape de précristallisation (S2).
